# EUROPEAN PATENT SPECIFICATION

(11) **EP 1 377 432 B1**
(45) Date of publication and mention of the grant of the patent: **22.11.2006**
(21) Application number: 02727403.4
(22) Date of filing: 08.03.2002
(51) Int. Cl.: B30B 11/24, B29C 47/46

(54) **PROCESS OF EXTRUSION**
EXTRUSIONSVERFAHREN
PROCEDE D'EXTRUSION

(30) Priority: 12.03.2001 EP 01105402
(43) Date of publication of application: 07.01.2004
(73) Proprietor: Société des Produits Nestlé S.A., 1800 Vevey (CH)
(72) Inventor: RICHARD, Jacques, (CH); MARCHIONINI, Yves, CH-1832 Villard-Sur-Chamby (CH); PFALLER, Werner, CH-1350 Orbe (CH)
(74) Representative: Archambault, Jean
(86) International application number: PCT/EP2002/002731
(87) International publication number: WO 2002/072338

(56) References cited:
- GB-A- 2 301 795
- US-A- 3 577 588
- US-A- 3 946 123
- US-A- 4 524 684
- US-A- 4 959 186

## Description

### TECHNICAL FIELD

The subject of the present invention is a process for the preparation of a foodstuff with an extruder with two distinct food processing sections.

### BACKGROUND ART

US Pat 5,891,502 describes a process for preparing a foodstuff by extrusion, which comprises introducing a first food substance to be processed into a first section of a twin-screw extruder, introducing a second food substance to be produced in a second section of the twin screw extruder wherein the first and the second sections are separated to allow separate processing in each section. The food substances are transported in the same direction but in different sections of the extruder.

US Pat 5,891,503 describes a process for preparing a foodstuff by extrusion, which comprises introducing a first food substance to be processed into a first section of a twin-screw extruder, directing the food substance as it exits an outlet of the first section of the extruder to a cooker, wherein the cooker is connected in series with the first section, and reintroducing the cooked food substance into an inlet of a second section of the extruder for further processing. The first and the second section of the extruder are configured to allow separate processing in each section. This process is a variation of the above-mentioned one and also provides that the food substances are transported in the same direction within the extruder.

These two processes have the advantage, that only one propelling device is required. A propelling device of an extruder normally is very space demanding. There is a motor or engine that propells the shaft. The turning speed of the shaft as furnished by the engine has to be reduced by a reducer, which itself often encompasses more space than the engine. Lastly, a voluminous gear box is responsible for further reducing speed, and, in the case of a twin screw extruder, is translating from a single shaft to two parallel shafts. Therefore, the state of the art above leads to a notable gain of space. Not to mention that each propelling device (engine, reducer and gearbox together) usually requires its own watching persons, for the extruding process including its propulsion has usually to be monitored constantly.

However, these two processes have several disadvantages from the mechanical point of view. Firstly, the food substances that are inserted exert, when transported, a force in the direction of the engine and its gear box. This force is a reactio, i.e. opposing, force to the one caused by the turning of the screw in order to transport the food substances. If the force extends a certain treshold value, the engine has to be halted in order to prevent a serious damage in the gear box of the engine. This means direct losses in productivity and necessitates additional service steps to regain the operational state of the extruder.

Secondly, the shaft of the srew of the extruder, according to the state of the art, is mainly fixed in the gear-box only. There is no further mounting for the shaft to attain a proper guiding of the screw. As a consequence, when extending away from the gear-box, the screw tends to touch the inner wall of the barrel during turning and thus sustain a constant friction.

The screw as well as the inner wall of the barrel will, with time, be subject to substantial abrasion.

Thirdly, the described processes, although enabling the processing of foodstuff substances in different sections of a single extruder, require two instead of one food collecting devices, because they envision two outlets at different positions of the extruding installation. The outlet is equipped depending on the food-stuff to be extruded. For example, an outlet of an extruder may comprise, at the end of the last extruder barrel, a central plate, a distributor and a dye. Therefore, the extruders according to the background art need more equipment, than an extruder with a single outlet.

US Patent No. 4,524,684 discloses a continuous press for pressing substances such as water, oils or fats from raw materials. The press has an inlet opening at each end, an outlet in the middle and a drive shaft provided with a pair of screw blades having opposing threads. The raw material to be processed is fed into the inlets and transported by the screw blades toward the outlet. As it progresses towards the outletit is subjected to increasing pressure due to the configuration of the screw bades and the drum in which they are located. The pressed material is discharged from the outlet as a cake.

The present invention addresses the problems set out above. Furthermore, the present invention, at the same time, should not lose the advantages as given by the teaching of the background art as described above.

### SUMMARY OF THE INVENTION

The present invention provides a process for the production of a foodstuff by extrusion comprising,
- processing a first food substance substance having a density between 75 and 130 g/l in a first section of an extruder,
- processing a second food substance substance having a density between 75 and 130 g/l in a second section of the extruder, and,
- extruding the two food substances through one common or two distinct outlet openings,
   and further comprising,
- processing the first and the second food substances within the extruder in opposite directions so that they are approaching each other.

The extruder may be a mono- or twin-screw extruder. The flight of the screws in the first section is mainly opposite-handed as compared to the flight of the screws in the second section, in a way that the food substances inserted into the two inlet openings are transported in opposite directions towards the outlet opening or the two outlet openings during processing.

Such an extruder, which may be a twin-screw or a mono-screw extruder, and such a process indeed surprisingly minimize the pressure execised on the gear-box, stabilize and guide the screw in the barrel and also make it possible to catch the foodstuff processed in the two sections by only one catching-device. Furthermore, only one propelling device is required.

### DEATAILED DESCRIPTION OF THE PREFERRED EMBODIMENTS

In this description, the expression "food substance" covers all the components introduced together or separately, at the same time or in succession, into one or another of the two sections of the extruder and processed altogether at least in part of this section.

For example, food substances comprises cereal-based mixtures, such as used in the preparation of breakfast cereals (flakes, crisps, or snacks. Moreover, the term comprises pet-food mixtures for extruding semi-dry or dry pet food, such as kibbles or other forms, for example.

For the purpose of the present invention, the expression an "outlet opening" is intended to mean any possible open outlet or die of an extruder, for example a die with a single or several orifices with all kinds of shape and size that are useful to obtain the desired product to be produced. One can equally imagine an open outlet without a die. It is possible that an outlet comprises a central plate, a distributor and a die. Sometimes, the central plate is equipped with a preexpansion nozzle. For the purpose of the present invention, these parts may be modified, substituted, absent or completed with other parts, depending on the extruded food-substance to be obtained.

For the purpose of the present invention the terms "shaft" and "screw", are intended to also include their respective plurals, if not separately indicated. Since the present invention is not restricted to either mono or twin-screw extruders, the plural form is sometimes ommitted by reason of convenience.

In order to carry out the current process, it is possible to start with food substances having a density between 75 and 130 g/l from which it is possible to produce, by extrusion, the widest possible range of foodstuffs such as breakfast cereals, children's cereals, snacks, crumb coatings, confectionery, pasta or products for domestic animals, for example.

The components and their respective proportions can be chosen, and these substances can then be processed in the extruder under conditions of pressure, shear and temperature which are chosen to suit the characteristics of the product to be obtained, especially as a function of the water content and degree of expansion which is to be obtained after the die.

As stated above, the present extruder, split into two distinct sections, comprises two inlet openings at two distal ends of the extruder, and one or two outlet openings between the two sections.

The extruder may be equipped with two parallel screws, wherein parallel shafts of the screws are connected with a propelling device at a first distal end of the extruder and with a final bearing at a second distal end of the extruder.

The flight of the screws in the first section may mainly be opposite-handed as compared to the flight of the screws in the second section in a way that the food substances inserted into the two inlet openings are transported in opposite directions towards the outlet opening or the two outlet openings during processing.

Alternatively, the extruder may be equipped with a single screw, wherein the shaft of the screw is connected with the propelling device at the first distal end of the extruder and with a final bearing at the second distal end of the extruder.

In this later case, the flight of the screw in the first section may also mainly be opposite-handed as compared to the flight of the screw in the second section in a way that the food substances inserted into the two inlet openings are transported in opposite directions towards the outlet opening or the two outlet openings during processing.

In a preferred embodiment of the invention, the outlet opening or the outlet openings are situated in approximately the centre of the extruder.

The processing of the two foodstuffs in opposite directions in a way that they are approaching each other may be reached by the turning of the screw extending through the two sections of food processing, the screw having in the first section an essentially inversed flight if compared to the second section.

The first food substance may be merged with the second food substance before extrusion and then both food substances may be extruded through a common outlet opening.

In this case, it is possible to get bi-colored products. This is achieved by using a first and a second food substance of different colors, or similar food substances that were colored with different food grade coloring agents.

It is further possible to have more than two different colors, mainly if any of the two food substances has already components of different colors. Hence, it is conceivable to have extruded food stuff of three or more colors, that is multi-colored food stuff.

For example, a bi-coulored, co-extruded pet food or breakfast cereal may be obtained. The two colors may indicate different flavors, functional ingredients, for example.

For example, the pet food may be intended for cats and/or dogs. It may comprise ingredients that allow slimming and/or ingredients that are favorable to health (functional ingredients).

In order to have a bi-colored foostuff, the outlet the two food-substances of different colored may be combined at or before the common outlet opening and co-extruded.

Alternatively, the first and the second food substances may be similar and may each be processed in their respective section in similar ways.

Or, alternatively, the process can be varied in a way that the first and the second food substances are different and are each processed in their respective section in different ways.

Optionally, provision may be made for cutting the extruded foodstuff before processing it into the final product.

Provision may be made to carry out the process with a twin-screw extruder, comprising two parallel shafts with two screws, or alternatively, with a mono-screw extruder, having a single shaft with a single screw.

It is possible to envisage a screw geometry which, for each section, is adapted to suit the substance to be processed and to the product which is to be obtained. In particular, successive and/or alternating zones for transporting, compacting, compressing, kneading or mixing, for example, may be envisaged. To define these various zones, the pitch of the screws, the space left empty for the substance to be processed, defined especially by the respective diameters of the shafts and of the flights, may be altered, or bilobes of varying shapes may be inserted, for example. It is also possible to act on a subdivision of the barrel of the extruder into several independent compartments, the temperature of which may be adjusted individually by circulating a cooling or heating fluid, for example. Furthermore, the mechanical energy needed to process the first and second substances in the two sections of the extruder and pass them through the die or dies may be supplied by a single means of driving the screws of the twin- or mono-screw unit, such as an electric motor, for example.

Finally, to pass a food substance through a die, this motor may be assisted or the load on it may be lightened using a positive-displacement pump such as a gear pump connected in vicinity of the die.

### BRIEF DESCRIPTION OF THE DRAWINGS

The device and process of the present invention are illustrated by way of example with reference to the appended drawing figures, wherein:
Figure 1 diagrammatically represents from lateral a mono-screw extruder is equipped with one outlet opening;
Figure 2 diagrammatically represents from above a twin-screw extruder provided with two outlet openings.
Figure 3 diagrammatically shows from above an extruder having two outlet openings and displays in greater detail the geometry of the screws and the barrels at the outlet openings.
Figure 4 diagrammatically shows from lateral an extruder having only one outlet opening and displays in greater detail the geometry of the screw and the barrel at the outlet opening.

### DETAILED DESCRIPTION OF THE DRAWINGS

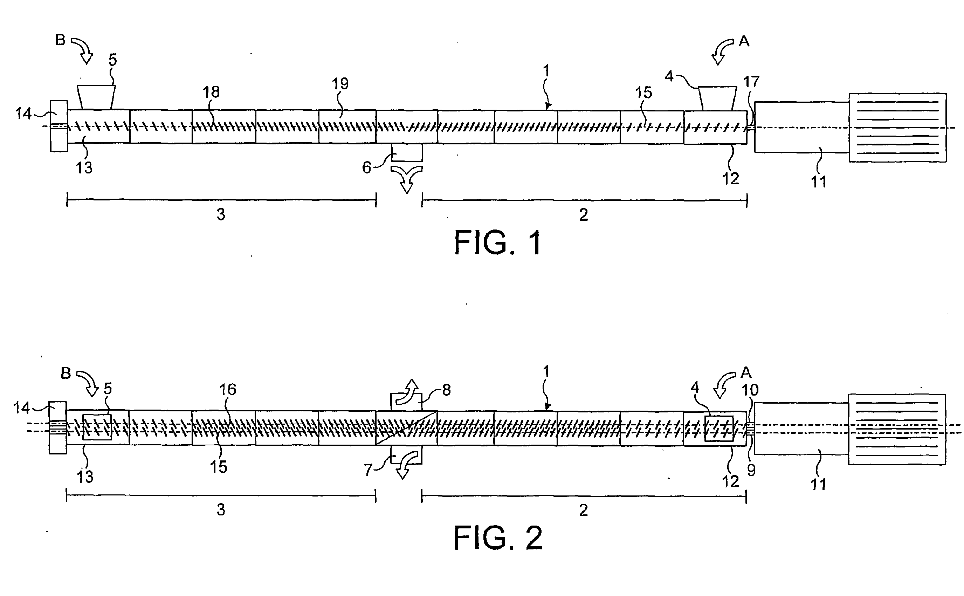

In the extruder represented in figure 1, a mono-screw extruder 1, split into two distinct sections 2 and 3, is envisaged to perform an extrusion of two distinct food-substances through one single, common outlet opening 6.
The outlet opening 6 for the food-substances to be processed in both sections is provided underneath the place where the two sections are connected. Each section comprises a number of distinct barrels 19. A first inlet opening 4 is placed at a first distal end 12 of the extruder, for a first food-substance (A) to be introduced into the first processing section 2. A second inlet opening 5 is placed at a second distal end 13 of the extruder, for a second food-substance (B) to be introduced into the second food-processing section 3. A shaft 17 extends through the two sections 2 and 3 and further extends from the first distal end 12 to a propelling device 11, for example an electric motor, a reducer and a gear box, that causes the turning of the shaft 17. After leaving, oppositely, the second distal end 13 of the extruder 1, the shaft is supported by a final bearing 14. Within the sections 2 and 3, the shaft 17 is equipped with a surrounding screw 18, the flight of which is responsible, besides other, for the direction of transport of the food-substances within the sections 2 and 3. To ensure that the food-substances entered through the inlet openings 4 and 5, respectively, are approaching each other towards the common outlet-opening 6, the flight of the screw 18 in section 2 is essentially opposite-handed if compared to the flight of the screw 18 in section 3.

The screw 15 is surrounded by barrels 19, five of them in each section 2 and 3 and one additional barrel, which serves as a support of the common outlet opening 6.

In the extruder represented in figure 2, a twin-screw extruder 1, split into two distinct sections 2 and 3, is envisaged to perform extrusion of two distinct food-substances through two distinct outlet openings 7 and 8. Hence, a first outlet opening 7 is designed as an exit for a first food-substance processed in the first section 2, and a second outlet opening 8 is designed as an exit for a second food-substance processed in the second section 3. The two distinct outlet openings 7 and 8 are provided at the place where the two sections meet. In the embodiment according to figure 2, the outlet-openings 7 and 8 are attached laterally of the extruder 1. A first inlet opening 4 is placed at a first distal end 12 of the extruder, for a first food-substance to be introduced into the first processing section 2. A second inlet opening 5 is placed at a second distal end 13 of the extruder, for a second food-substance to be introduced into the second food-processing section.

Two shafts 9 and 10 extend through the two sections 2 and 3 and further extend over the first distal end 12 to a propelling device 11, for example comprising an electric motor, a reducer and a gear box, that causes the turning of the shafts 9 and 10. After leaving the second distal end 13 of the extruder 1, the shafts are supported by a final bearing 14. Within the sections 2 and 3, the shafts 9 and 10 are each equipped with a surrounding screw 15 and 16 respectively. Again, the geometry of the flight is responsible, besides other, for the direction of transport of the food-substances within the sections 2 and 3. To ensure that the food-substances entered through the inlet openings 4 and 5, respectively, are approaching each other towards the respective outlet-openings 7 and 8, the flights of the screws 15 and 16 in section 2 are essentially opposite-handed if compared to the flights of the screws 15 and 16 in section 3.

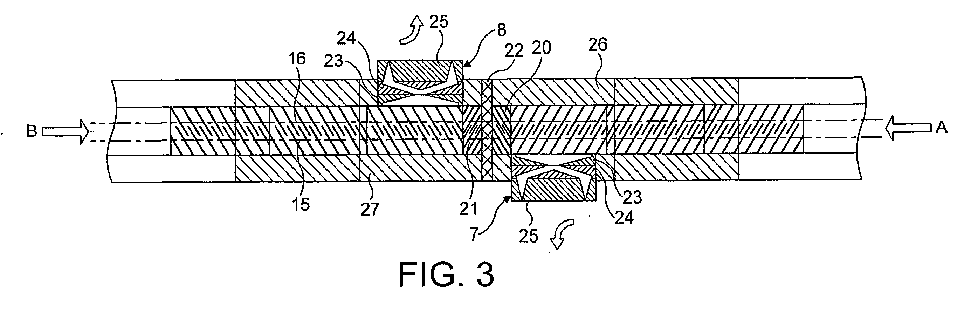

Figure 3 shows in greater detail a possible embodiment of the two outlet openings of the extruder 1 illustrated in figure 2. The two food-substances (A and B) that are approaching each other through the two sections 2 and 3 are transported towards two reverse screws 20 an 21, respectively, which are intended to direct the food-substances A and B to their respective outlet-openings 7 and 8. A dynamic lock 22 ultimately stops the food-substances from being pushed through into the opposite sections. The two outlet openings 7 and 8 are made up of similar parts. A central plate 23 is fixed into each of the last barrel 26 or 27 of the respective section and further guides the food-substances towards a distributor 24. From there, the food-substances finally reach the extrusion-die 25, which additionally determines the form and kind of the extruded food-substances.

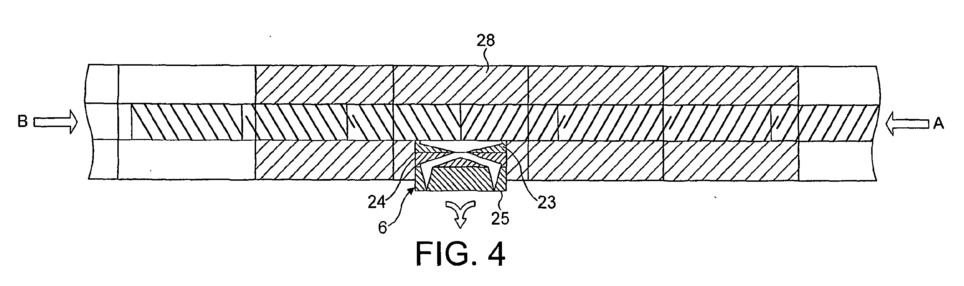

Figure 4 shows in greater detail a possible embodiment of the outlet opening 6 of the mono-screw extruder represented in figure 1. In this case, a dynamic lock and a reverse screw are in general not used. A barrel 28, placed between the two sections 2 and 3, supports the outlet opening 6, which comprises a central plate 23, a distributor 23 and a die 24.

The example below is given by way of an illustration of the process according to the present invention and the products which can be obtained thereby. The percentages and parts here are given by weight.
In this example, the oil may be chosen, if need be, as a function of the physical purpose it has in the processed and extruded mass, and as a function of its taste, neutral or otherwise. It may be chosen from palm kernel oil, groundnut oil or corn oil, for example.
In this examples, too, the mixture of flours, the oil and the water are introduced, as appropriate, individually into the feed opening of the extruder section in question.

### EXAMPLE 1

Use is made of an extruder like the one represented in Figure 2. The extrusion dies are produced in the form of two plates each pierced with 6 cylindrical extrusion ducts 3.5 mm in diameter.
This installation is used to prepare two different breakfast cereal products with the ingredients and under the conditions given in Tables 1a and 1b below. Table 1) gives the ingredients of mixtures of flours, their proportions in two typical mixtures, A and B and the possible range of their proportions.
Table 2) gives the quantities of ingredients introduced into each section of the installation per hour, the water content of the substances or of the processed masses and the operating conditions.
To process the mass A, the injection of steam into the first section in the region of an intermediate transport zone is provided.

**Table 1)**

| Mixtures of flours | | | | |
|---|---|---|---|---|
| Ingredient | Mixture A (%) | Mixture B (%) | Range mix. A (%) | Range mix. B (%) |
| Cornflour | 80 | 20 | 80 - 89 | 0 - 80 |
| Wheatflour | 11 | 64 | - | 0 - 80 |
| Oatmeal | - | 10 | - | 0 - 80 |
| Sugar | 6.9 | 4.9 | 0 - 12 | 0 - 12 |
| Salt | 2 | 1 | 0 - 3 | 0 - 3 |
| Vitamins and trace elements | 0.1 | 0.1 | 0.1 - 0.2 | 0.1 - 0.2 |
| Total | 100 | 100 | 100 | 100 |

**Table 2)**

| Operating conditions | | | |
|---|---|---|---|
| Parameter | Units | Value | Possible range |
| Mixtures of flours A | kg/h | 200 | 200 - 400 |
| Steam | kg/h | 15 | 0 - 40 |
| Water | kg/h | 35 | 0 - 60 |
| Water content A | % | 18 | 14 - 40 |
| Mixture of flours B | kg/h | 180 | 100 - 400 |
| Oil | kg/h | 15 | 0 - 40 |
| Water | kg/h | 20 | 0 - 70 |
| Water content B | % | 18 | 14 - 38 |
| Rotational speed of screws | Rpm | 250 | 100 - 420 |
| Temperature mass A | °C | 150 | 100 - 140 |
| Pressure mass A | bar | 126 | 80 - 150 |
| Temperature mass B | °C | 170 | 140 - 180 |
| Pressure mass B | bar | 132 | 80 - 150 |
| Current | A | 265 | 150 - 486 |
| Residence time | s | 25 | 20 - 45 |
| Density (B) | g/l | 98 | 75 - 130 |
| Pressure in Barrel (A) | bar | 10 | |
| Pressure in Barrel (B) | bar | 10 | |

Two different breakfast cereal products of expanded balls 8-12 mm in diameter are thus obtained.

### Example 2: Bicoloured pet food

A feed mixture is made up of about 58% by weight of corn, about 5.5% by weight of corn gluten, about 22% by weight of chicken meal, 10% of a mix of dietary fatty acids consisting of 60% tallow, 25% sunflower oil, 15% coconut oil and salts, vitamins and minerals making up the remainder. The mixture is separated in two eqully weighted parts.

Each part of the feed mixture is fed into a preconditioner and moistened and supplemented with different color agents (red and fawn).

The moistened parts of different colors (first and second food substances) are fed into the two different inlet openings of the extruder exemplified in Figure 1.

The differently colored food substances are gelatinised and cooked within the two sections, merged before the common outlet opening and co-extruded.

The extrudate is cut into pieces suitable for feeding to dogs, dried at about 110°C for about 20 minutes, and cooled to form bi-colored kibbles.

## Claims

1. A process for the preparation of a foodstuff by extrusion comprising,
- processing a first food substance having a density between 75 and 130 g/l in a first section of an extruder,
- processing a second food substance substance having a density between 75 and 130 g/l in a second section of the extruder, the process being **characterised in that**
- the two food substances are extruded through one common or two distinct outlet openings,
and further comprising,
- processing the first and the second food substances within the extruder in opposite directions so that they are approaching each other.

2. A process according to claim 1, wherein the processing of the two foodstuffs in opposite directions in a way that they are approaching each other is reached by the turning of the one or two screws extending through the two sections of food processing, the one or two screws having in the first section an essentially inversed flight or inversed flights if compared to the second section.

3. The process according to claim 1 or 2, wherein the first food substance is merged with the second food substance before extrusion and then both food substances are extruded through a common outlet opening.

4. The process according to any of claims 1 to 3, wherein the first and the second food substances are similar and are each processed in their respective section in similar ways.

5. The process according to any of claims 1 to 3, wherein the first and the second food substances are different and are each processed in their respective section in different ways.

## Patentansprüche

1. Verfahren zur Herstellung eines Lebensmittels durch Extrusion, das umfasst:
- Verarbeiten einer ersten Lebensmittelsubstanz mit einer Dichte zwischen 75 und 130 g/l in einem ersten Abschnitt eines Extruders,
- Verarbeiten einer zweiten Lebensmittelsubstanz mit einer Dichte zwischen 75 und 130 g/l in einem zweiten Abschnitt des Extruders,
- wobei das Verfahren **dadurch gekennzeichnet ist, dass** die beiden Lebensmittelsubstanzen durch eine gemeinsame oder zwei unterschiedliche Auslassöffnungen extrudiert werden,
und das außerdem umfasst:
- die Verarbeitung der ersten und der zweiten Lebensmittelsubstanz innerhalb des Extruders in entgegensetzten Richtungen, so dass sie sich aufeinander zu bewegen.

2. Verfahren nach Anspruch 1, wobei die Verarbeitung der beiden Lebensmittel in entgegengesetzten Richtungen auf eine Weise, dass sie sich aufeinander zu bewegen, dadurch erreicht wird, dass man die eine oder die beiden Schnecken, die sich durch die beiden Abschnitte der Lebensmittelverarbeitung hindurch erstrecken, dreht, wobei die eine oder die beiden Schnecken im ersten Abschnitt, verglichen mit dem zweiten Abschnitt, eine im Wesentlichen invertierte Steigung oder invertierte Steigungen aufweisen.

3. Verfahren nach Anspruch 1 oder 2, wobei die erste Lebensmittelsubstanz mit der zweiten Lebensmittelsubstanz vor der Extrusion vereinigt wird und dass dann beide Lebensmittelsubstanzen durch eine gemeinsame Auslassöffnung extrudiert werden.

4. Verfahren nach irgendeinem der Ansprüche 1 bis 3, wobei die erste und die zweite Lebensmittelsubstanz einander ähnlich sind und in ihren entsprechenden Abschnitten auf ähnliche Weise verarbeitet werden.

5. Verfahren nach irgendeinem der Ansprüche 1 bis 3, wobei die erste und die zweite Lebensmittelsubstanz sich voneinander unterscheiden und in ihren entsprechenden Abschnitten auf unterschiedliche Weise verarbeitet werden.

## Revendications

1. Procédé pour la préparation d'un aliment par extrusion comprenant les étapes consistant à :
- transformer une première substance alimentaire ayant une densité comprise entre 75 et 130 g/l dans une première section d'une extrudeuse,
- transformer une deuxième substance alimentaire ayant une densité comprise entre 75 et 130 g/l dans une deuxième section de l'extrudeuse, le procédé étant **caractérisé en ce que** les deux substances alimentaires sont extrudées via une ouverture de sortie commune ou deux ouvertures de sortie distinctes,
et comprenant en outre :
- la transformation des première et deuxième substances alimentaires au sein de l'extrudeuse dans des directions opposées de manière qu'elles se rapprochent l'une de l'autre.

2. Procédé selon la revendication 1, dans lequel la transformation des deux aliments dans des directions opposées de manière qu'elles se rapprochent l'une de l'autre est réalisée par la rotation d'une vis ou de deux vis s'étendant dans les deux sections de transformation d'aliments, la vis ou les deux vis ayant dans la première section un pas ou des pas essentiellement inverse(s) des pas dans la deuxième section.

3. Procédé selon la revendication 1 ou 2, dans lequel la première substance alimentaire est incorporée à la deuxième substance alimentaire avant extrusion puis les deux substances alimentaires sont extrudées via une ouverture de sortie commune.

4. Procédé selon l'une quelconque des revendications 1 à 3, dans lequel les première et deuxième substances alimentaires sont similaires et sont chacune transformées dans leur section respective de façons similaires.

5. Procédé selon l'une quelconque des revendications 1 à 3, dans lequel les première et deuxième substances alimentaires sont différentes et sont chacune transformées dans leur section respective de façons différentes.
